# FASCICULE DE BREVET EUROPEEN

(11) **EP 3 795 973 B1**
(45) Date de publication et mention de la délivrance du brevet: **29.10.2025**
(21) Numéro de dépôt: 20195427.8
(22) Date de dépôt: 10.09.2020
(51) Int. Cl.: G01M 3/22

(54) **PROCÉDÉ ET ÉQUIPEMENT DE DÉTECTION D'UN DÉFAUT D ÉTANCHÉITÉ D'UN EMBALLAGE**
VERFAHREN UND AUSRÜSTUNG ZUR ENTDECKUNG EINER UNDICHTEN STELLE IN EINER VERPACKUNG
METHOD AND DEVICE FOR DETECTING A SEALING FAULT IN PACKAGING

(30) Priorité: 17.09.2019 FR 1910238
(43) Date de publication de la demande: 24.03.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: IBARRA, Dominique, 78350 Les Loges-En-Josas (FR); AVILES, Carlos, 78350 Les Loges-En-Josas (FR); CARRE, Martine, 78350 Les Loges-En-Josas (FR); LESORT, Anne-Laure, 78350 Les Loges-En-Josas (FR)
(74) Mandataire: Air Liquide

(56) Documents cités:
- EP-A1- 1 324 014
- EP-A1- 1 980 833
- WO-A1-2012/125108
- JP-A- S6 479 635
- JP-B2- H0 737 912
- US-A- 3 091 114
- US-A- 5 029 463

## Description

La présente invention concerne le domaine de la mise sous atmosphère modifiée de produits, notamment de produits alimentaires.

La mise sous atmosphère modifiée consiste à remplacer l'air à l'intérieur d'un contenant par un mélange gazeux adapté à la conservation du produit conditionné. Selon le domaine d'application, le contenant peut prendre plusieurs formes : un bocal, un flacon, une bouteille, une barquette, ou encore un sachet, etc....

En général, l'effet protecteur de l'atmosphère modifiée ne peut être assuré que si sa composition reste constante ou sensiblement constante tout au long de la durée de conservation du produit conditionné. La mise sous atmosphère protectrice est généralement un procédé automatisé qui garantit une bonne étanchéité des emballages. Néanmoins, des défauts provocants des fuites, tels que des défauts de soudure des emballages operculés, ou des percements du film plastique, sont plus ou moins récurrents selon l'application. De même, les effets desdites fuites peuvent présenter un caractère de gravité ou non selon la nature du produit. La présence d'une fuite provoque une augmentation de la perméabilité de l'emballage et l'augmentation des échanges gazeux avec l'extérieur. On note que la vitesse de ces échanges gazeux entre les atmosphères interne et externe est directement liée à la taille de la fuite.

Ces échanges entraînent une variation de la composition de l'atmosphère interne et la perte d'efficacité de l'atmosphère modifiée. D'où l'importance pour les industriels de détecter les fuites qui pourraient représenter un risque pour le consommateur final (risque microbiologique par exemple lorsqu'il s'agit d'un produit alimentaire) ou pour le fabricant lui-même (risque de pertes économiques si le produit n'est pas conforme aux critères réglementaires).

Il existe aujourd'hui des solutions de détection de fuite, la plupart hors-ligne de production (analyse par échantillonnage statistique).

Parmi les solutions en ligne, nombreuses sont celles qui proposent une analyse non destructive de la totalité de la production. Les fabricants des équipements de détection de fuite affichent des seuils de détection très bas (jusqu'à 30 µm) et la possibilité d'atteindre des cadences de production très élevées. Néanmoins, la sensibilité des appareils est inversement proportionnelle à la vitesse de la ligne, et ainsi afin de détecter les fuites les plus petites, la vitesse de la ligne doit être réduite, tandis qu'inversement, pour respecter une cadence de ligne élevée, le seuil de fuite détectable doit être considérablement élevé.

Parmi les solutions « en ligne » on peut citer les exemples suivants :

### - Détection d'un gaz traceur - sous vide

Selon cette méthode, l'emballage est mis sous vide et le gaz qui fuit est mesuré (principalement du CO₂). En cas de présence du gaz traceur, l'emballage est identifié comme ayant une fuite.

Cette méthode se caractérise par les inconvénients suivants :
- Une faible vitesse de détection (environ 15 pas/minute)
- Un coût élevé
- Une consommation énergétique élevée

### - Détection d'un gaz avec application d'une force

Selon cette méthode une force mécanique est appliquée sur l'emballage en système ouvert, l'atmosphère autour de l'emballage est aspirée et envoyée dans un analyseur, et le gaz qui fuit est mesuré. En cas de présence du gaz traceur, l'emballage est identifié comme ayant une fuite.

Cette méthode se caractérise par les inconvénients suivants :
- Un seuil de détection élevé
- Un coût élevé
- Selon le gaz tracé, certains gaz comme l'hydrogène posent des problèmes de sécurité.

Toujours dans cette catégorie des méthodes de détection de gaz avec application d'une force on peut citer le cas de la méthode proposée par la société Linde, où les emballages passent les uns derrières les autres dans un équipement fermé de type tunnel, dans lequel ils sont soumis à une force mécanique qui force la fuite de gaz. Le gaz traceur est analysé dans l'équipement. Le problème est que les emballages passent les uns derrière les autres sans "séparation" dans le temps donc le système semble donner de faux positifs avec par exemple la détection de traces d'hydrogène pour des emballages qui ne sont pas fuyards.

### - Détection d'une force

Selon cette méthode une force mécanique est appliquée sur l'emballage. Un changement de la force indique une fuite.

Cette méthode se caractérise par les inconvénients suivants :
- Un seuil de détection élevé
- Un coût élevé

D'une manière générale, dans les trois solutions précédentes, les paramètres « seuil de détection » (taille minimum de fuite détectable) et « vitesse de détection » sont corrélés. Ainsi pour atteindre un seuil de détection bas, et donc être capable de détecter des fruites de petites tailles, un industriel devra baisser sa cadence, ce qui est contraire à ses intérêts de productivité.

### - Détection par indication du taux d'oxygène

Selon cette méthode un niveau d'oxygène non acceptable dans l'emballage (car résultant d'une fuite) peut être détecté de manière optique.

Cette méthode se caractérise par les inconvénients suivants :
- Elle ne convient pas à des produits conservés sous haute teneur en oxygène (e.g. viande rouge).
- L'efficacité du test dépend du moment auquel il est réalisé (directement après l'étape d'emballage ou bien quelques minutes plus tard).
- Elle ne convient pas pour un produit dont la structure a emmagasiné un peu d'air et donc relargue de l'oxygène.
- L'emballage doit être transparent.

La présente invention s'attache donc notamment à proposer une solution de détection de fuites qui puisse satisfaire à la fois les exigences de seuil de taille de fuite et de cadence de production, qui soit non destructive, avec un seuil de détection minimum de 30 µm sans ralentissement de la cadence, et permettant le contrôle de 100 % des emballages d'une ligne de production.

Comme on le verra plus en détail dans ce qui suit, la présente invention se caractérise par la mise en œuvre des caractéristiques suivantes :
- On procède à la détection de fuite par détection d'un gaz traceur en système clos mais sans tirage au vide,
- Pour ce faire on met en place un capot, avec un volume minimal, le capot s'abaisse sur l'emballage à tester de manière individuelle, avant de remonter une fois le test effectué,
- On met en œuvre (au moins) un capteur directement dans la chambre d'analyse que constitue l'espace interne au capot et la distance entre le(s) capteur(s) et l'emballage peut avantageusement être automatiquement ajustée.

Les avantages de l'invention sont multiples et notamment :
- Le gaz traceur n'est pas dilué de manière excessive, beaucoup moins que selon les solutions de l'art antérieur,
- Capacité de détecter des micro-défauts d'étanchéité (30 µm environ) à des hautes vitesses de ligne de production (on peut en effet considérer que ce capot permet d'isoler l'emballage de son environnement pour une mesure plus précise, la procédure est rapide par rapport à une étape de vide ou d'« aspiration »),
- Le système est aisément adaptable à des lignes existantes,
- Un coût réduit,
- Une faible consommation d'énergie (par rapport à une solution nécessitant un tirage au vide),
- Elle fonctionne quel que soit l'emballage (transparent ou non),
- En se relevant, le dessous du capot est "rincé" par l'air ambiant, minimisant le risque de gaz traceur qui engendrerait des faux-positifs (comme dans l'art antérieur).

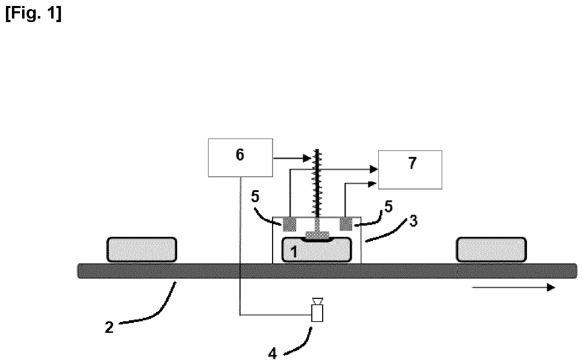

[Fig. 1] annexée permet de mieux comprendre le fonctionnement de l'invention grâce à cette représentation schématique partielle d'une installation convenant pour la mise en œuvre de la méthode de l'invention :
- Un emballage (1) circule sur le convoyeur d'une ligne de production (2). L'emballage contient un gaz traceur tel que par exemple du CO₂.
- Un capot (3) situé au-dessus du convoyeur est équipé de telle sorte qu'il peut se déplacer verticalement au-dessus du convoyeur.
- Lorsqu'un emballage se déplaçant sur le convoyeur est détecté comme étant en dessous du capot par un détecteur de présence (4), le capot est abaissé automatiquement (information reçue par le système de contrôle 6). L'emballage se retrouve alors dans un endroit clos. Un système de plateau (non représenté) positionné sur la face interne supérieure du capot vient alors appuyer légèrement sur l'emballage de manière à créer une pression sur l'emballage, forçant ainsi le gaz à sortir de l'emballage en cas de fuite.
- Un ou plusieurs analyseurs de gaz miniatures (5) sont positionnés et fixés à l'intérieur du capot. En cas de détection du gaz traceur par un ou plusieurs capteurs, l'emballage est identifié comme fuyard. Préférentiellement, le choix se porte sur des analyseurs par conductibilité thermique, du fait du temps de réponse très court de ce type de capteur.
- Optionnellement, un signal est envoyé à un système automatisé (7) d'éjection de l'emballage de la ligne de production.

Avantageusement, afin de ne pas ralentir la ligne de production, l'une ou chacune des trois solutions suivantes peuvent être mises en place si besoin, pour compléter l'installation :
- Des moyens d'accélération de la ligne en aval du capot.
- Un accompagnement du produit par le capot le temps de l'analyse (le capot se déplace à la vitesse de la ligne une fois en place sur le produit), ce mode permet d'éviter un ralentissement du convoyeur pour donner le temps au capteur de réaliser l'analyse. Le capot ne peut ici se relever qu'une fois l'analyse réalisée.
- La séparation du convoyeur en plusieurs lignes parallèles, chacune équipée d'un capot, le temps de l'analyse de fuite ; les lignes se rejoignent alors à nouveaux après l'analyse. Ce mode permet de réaliser plusieurs mesures en parallèle, la cadence de la ligne est alors maintenue voire augmentée.

L'invention concerne alors une méthode de détection d'un défaut d'étanchéité d'un emballage, emballage produit dans une ligne de production d'emballages de produits (notamment de produits alimentaires) sous atmosphère protectrice selon la revendication 1 et comprenant les étapes suivantes :
- Un emballage à tester circule sur un convoyeur de la ligne de production d'emballages de produits ;
- L'emballage contient une atmosphère protectrice qui contient un gaz traceur tel que par exemple du CO₂;
- On dispose d'un capot, situé au-dessus du convoyeur, et équipé de moyens lui permettant de se déplacer verticalement au-dessus du convoyeur ;
- On dispose d'un système de détection de la présence d'un emballage à tester en regard (en dessous) du capot, et ainsi lorsqu'un emballage à tester se déplaçant sur le convoyeur est détecté comme étant en dessous du capot, le capot est abaissé sur l'emballage, emballage qui se retrouve alors dans un endroit clos ;
- On exerce une force sur l'emballage de manière à créer une pression sur l'emballage, forçant ainsi le gaz à sortir de l'emballage en cas de fuite ;
- On procède à une analyse de l'atmosphère présente dans le capot suite à l'application de ladite force, et en cas de détection du gaz traceur lors de cette analyse, l'emballage est identifié comme fuyard, l'analyse étant effectuée à l'aide d'au moins un analyseur de gaz positionné à l'intérieur du capot, apte à détecter la présence, dans l'atmosphère interne au capot suite à l'application de ladite force, d'un gaz traceur;
- On procède au relèvement du capot après l'analyse, laissant l'emballage testé poursuivre son chemin sur la ligne de production, un emballage identifié comme fuyard étant le cas échéant éjecté de la ligne.

L'invention concerne également une installation de détection d'un défaut d'étanchéité d'un emballage, emballage produit dans une ligne de production d'emballages de produits (notamment de produits alimentaires) sous atmosphère protectrice selon la revendication 3 et comprenant les éléments suivants :
- un capot, situé au-dessus d'un convoyeur de la ligne de production d'emballages de produits, convoyeur apte à convoyer les emballages à tester,
- des moyens permettant de déplacer verticalement le capot au-dessus du convoyeur ;
- le capot est muni en son espace intérieur de moyens (par exemple d'un système de plateau) permettant d'effectuer une pression sur un emballage pour forcer le gaz à sortir de l'emballage en cas de fuite ;
- le capot est muni en son espace intérieur d'un ou plusieurs capteurs d'analyse de gaz aptes à détecter la présence, dans l'atmosphère interne au capot suite à l'application de ladite force, d'un gaz traceur;
- un moyen de détection de la présence d'un emballage en regard (en dessous) du capot ;
- des moyens d'acquisition et de traitement de données aptes, lorsque la présence d'un emballage à analyser est détectée en dessous du capot, à ordonner l'abaissement du capot sur l'emballage considéré, l'exercice de ladite force sur l'emballage et l'analyse de l'atmosphère interne au capot, puis le relèvement, après analyse, du capot, pour permettre à l'emballage testé de poursuivre son chemin sur la ligne de production.

Comme mentionné plus haut, il y a un état de la technique important s'intéressant à la détection de fuites dans les emballages.

Mais comme on l'aura compris à la lecture de ce qui précède, un point différenciant et essentiel de la présente invention réside dans le fait que l'analyseur est situé à l'intérieur du capot, ce qui est crucial en terme de rapidité de réaction mais également pour supprimer toute nécessité de balayer l'ambiance interne pour l'amener via un pipe (plus ou moins long) jusqu'au capteur. Et les avantages techniques de la présente invention sont très bien détaillés plus haut dans la présente description.

On pourra notamment s'intéresser aux documents suivants :
- US-5 029 463 : qui met en œuvre un système d'aspiration de gaz pour déplacer l'air qui est sous le capot vers un pipe et le capteur de gaz est placé dans le pipe, l'analyseur de gaz, susceptible de détecter la présence du gaz traceur, n'est donc pas situé à l'intérieur du capot.
- WO2012/125108 : ici encore, comme en témoigne notamment sa figure 1, le capteur est situé en dehors du capot.
- EP-1 324 014 : le capot est fixe et ici encore le capteur est déporté.
- US-3 091 114 : sans ambiguïté ici aussi le détecteur est positionné à l'extérieur du capot (en l'occurrence au-dessus).

## Revendications

1. Méthode de détection d'un défaut d'étanchéité d'un emballage (1), emballage produit dans une ligne de production d'emballages de produits, notamment de produits alimentaires, sous atmosphère protectrice, comprenant la mise en œuvre des mesures suivantes :
- Un emballage à tester circule sur un convoyeur (2) de la ligne de production d'emballages de produits ;
- L'emballage contient une atmosphère protectrice qui contient un gaz traceur tel que par exemple du CO₂;
- On dispose d'un capot (3), situé au-dessus du convoyeur, et de moyens permettant au capot de se déplacer verticalement au-dessus du convoyeur ;
- On dispose d'un système de détection (4) de la présence d'un emballage à tester en regard du capot ;
- Lorsqu'un emballage à tester se déplaçant sur le convoyeur est détecté comme étant en dessous du capot, le capot est abaissé sur l'emballage, emballage qui se retrouve alors dans un endroit clos ;
- On exerce une force (6) sur l'emballage de manière à créer une pression sur l'emballage, forçant ainsi le gaz à sortir de l'emballage en cas de fuite ;
- On procède à une analyse de l'atmosphère présente dans le capot suite à l'application de ladite force, et en cas de détection du gaz traceur lors de cette analyse, l'emballage est identifié comme fuyard ;
- On procède au relèvement du capot après l'analyse, laissant l'emballage testé poursuivre son chemin sur la ligne de production, un emballage identifié comme fuyard étant le cas échéant éjecté de la ligne ;
**se caractérisant en ce que** le capot est muni en son espace intérieur d'au moins un analyseur (5) de gaz, comportant un ou plusieurs capteurs d'analyse de gaz aptes à effectuer ladite détection de la présence, dans l'atmosphère interne au capot suite à l'application de ladite force, d'un gaz traceur.

2. Méthode selon la revendication 1, **se caractérisant en ce que** la distance entre le ou les analyseurs et l'emballage est automatiquement ajustée.

3. Installation de détection d'un défaut d'étanchéité d'un emballage (1), pour la mise en œuvre du procédé selon l'une des revendications 1 ou 2, emballage produit dans une ligne de production d'emballages de produits, par exemple de produits alimentaires, sous atmosphère protectrice, comprenant les éléments suivants :
- un capot (3), situé au-dessus d'un convoyeur (2) de la ligne de production d'emballages de produits, convoyeur apte à convoyer les emballages à tester,
- des moyens permettant de déplacer verticalement le capot au-dessus du convoyeur ;
- le capot est muni en son espace intérieur de moyens permettant d'effectuer une pression sur un emballage pour forcer le gaz à sortir de l'emballage en cas de fuite ;
- un ou plusieurs capteurs (5) d'analyse de gaz aptes à détecter la présence, dans l'atmosphère interne au capot suite à l'application de ladite force, d'un gaz traceur,
- un moyen de détection (4) de la présence d'un emballage en regard du capot ;
- des moyens (6) d'acquisition et de traitement de données aptes, lorsque la présence d'un emballage à analyser est détectée en dessous du capot, à ordonner l'abaissement du capot sur l'emballage considéré, l'exercice de ladite force sur l'emballage et l'analyse de l'atmosphère interne au capot, puis le relèvement, après analyse, du capot, pour permettre à l'emballage testé de poursuivre son chemin sur la ligne de production ;
**se caractérisant en ce que** le capot est muni en son espace intérieur d'un ou plusieurs capteurs (5) d'analyse de gaz aptes à effectuer ladite détection de la présence, dans l'atmosphère interne au capot suite à l'application de ladite force, d'un gaz traceur.

4. Installation selon la revendication 3, **se caractérisant en ce que** lesdits moyens d'acquisition et de traitement sont aptes à ajuster automatiquement la distance entre le ou les capteurs d'analyse (5) et l'emballage (1).

5. Installation selon la revendication 3 ou 4, **se caractérisant en ce qu'**elle comporte un système d'éjection apte, selon le résultat de ladite analyse, à éjecter de la ligne un emballage identifié comme fuyard.

6. Installation selon l'une des revendications 3 à 5, **se caractérisant en ce que** le ou les capteurs d'analyse sont des analyseurs par conductibilité thermique.

## Patentansprüche

1. Verfahren zum Nachweis eines Dichtheitsfehlers einer Verpackung (1), wobei die Verpackung in einer Produktionslinie für Produktverpackungen, insbesondere Lebensmittelprodukte, unter Schutzatmosphäre hergestellt wird, umfassend die Durchführung der folgenden Maßnahmen:
- Eine zu prüfende Verpackung zirkuliert auf einem Förderband (2) der Produktionslinie für Produktverpackungen;
- Die Verpackung enthält eine Schutzatmosphäre, die ein Spurengas, wie beispielsweise CO2, enthält;
- Eine Haube (3) ist oberhalb des Förderbandes angeordnet und mit Mitteln ausgestattet, die es der Haube ermöglichen, sich vertikal über dem Förderband zu bewegen;
- Ein Erfassungssystem (4) für die Anwesenheit einer zu prüfenden Verpackung gegenüber (unterhalb) der Haube ist vorgesehen;
- Wenn eine sich auf dem Förderband bewegende, zu prüfende Verpackung als unterhalb der Haube befindlich detektiert wird, wird die Haube auf die Verpackung abgesenkt, wobei sich die Verpackung dann in einem geschlossenen Raum befindet;
- Eine Kraft (6) wird auf die Verpackung ausgeübt, um einen Druck auf die Verpackung zu erzeugen, wodurch das Gas im Falle eines Lecks aus der Verpackung austritt;
- Eine Analyse der in der Haube vorhandenen Atmosphäre wird nach dem Anlegen der besagten Kraft durchgeführt, und im Falle einer Detektion des Spurengases während dieser Analyse wird die Verpackung als undicht identifiziert;
- Die Haube wird nach der Analyse angehoben, wodurch die geprüfte Verpackung ihren Weg auf der Produktionslinie fortsetzen kann, wobei eine als undicht identifizierte Verpackung gegebenenfalls aus der Linie ausgeworfen wird;
**dadurch gekennzeichnet, dass** die Haube in ihrem Innenraum mit mindestens einem Gasanalysator (5) ausgestattet ist, der einen oder mehrere Gasanalyse-Sensoren aufweist, die in der Lage sind, die besagte Detektion der Anwesenheit eines Spurengases in der Atmosphäre innerhalb der Haube nach dem Anlegen der besagten Kraft durchzuführen.

2. Verfahren nach Anspruch 1, **dadurch gekennzeichnet, dass** der Abstand zwischen dem oder den Analysatoren und der Verpackung automatisch eingestellt wird.

3. Vorrichtung zum Nachweis eines Dichtheitsfehlers einer Verpackung (1), zur Durchführung des Verfahrens nach einem der Ansprüche 1 oder 2, wobei die Verpackung in einer Produktionslinie für Produktverpackungen, beispielsweise Lebensmittelprodukte, unter Schutzatmosphäre hergestellt wird, umfassend die folgenden Elemente:
- eine Haube (3), die oberhalb eines Förderbandes (2) der Produktionslinie für Produktverpackungen angeordnet ist, wobei das Förderband in der Lage ist, die zu prüfenden Verpackungen zu befördern;
- Mittel zum vertikalen Bewegen der Haube über dem Förderband;
- die Haube ist in ihrem Innenraum mit Mitteln (beispielsweise einem Plattensystem) ausgestattet, die es ermöglichen, Druck auf eine Verpackung auszuüben, um Gas im Falle eines Lecks aus der Verpackung zu pressen;
- einen oder mehrere Gasanalyse-Sensoren (5), die in der Lage sind, die Anwesenheit eines Spurengases in der Atmosphäre innerhalb der Haube nach dem Anlegen der besagten Kraft zu detektieren;
- ein Detektionsmittel (4) für die Anwesenheit einer Verpackung gegenüber (unterhalb) der Haube;
- Mittel (6) zur Datenerfassung und -verarbeitung, die in der Lage sind, wenn die Anwesenheit einer zu analysierenden Verpackung unterhalb der Haube detektiert wird, das Absenken der Haube auf die betreffende Verpackung, die Ausübung der besagten Kraft auf die Verpackung und die Analyse der Atmosphäre innerhalb der Haube und anschließend das Anheben der Haube nach der Analyse zu veranlassen, um der geprüften Verpackung zu ermöglichen, ihren Weg auf der Produktionslinie fortzusetzen;
**dadurch gekennzeichnet, dass** die Haube in ihrem Innenraum mit einem oder mehreren Gasanalyse-Sensoren (5) ausgestattet ist, die in der Lage sind, die besagte Detektion der Anwesenheit eines Spurengases in der Atmosphäre innerhalb der Haube nach dem Anlegen der besagten Kraft durchzuführen.

4. Vorrichtung nach Anspruch 3, **dadurch gekennzeichnet, dass** die besagten Erfassungs- und Verarbeitungsmittel in der Lage sind, den Abstand zwischen dem oder den Analyse-Sensoren (5) und der Verpackung (1) automatisch einzustellen.

5. Vorrichtung nach Anspruch 3 oder 4, **dadurch gekennzeichnet, dass** sie ein Auswurfsystem umfasst, das in der Lage ist, gemäß dem Ergebnis der besagten Analyse eine als undicht identifizierte Verpackung aus der Linie auszuwerfen.

6. Vorrichtung nach einem der Ansprüche 3 bis 5, **dadurch gekennzeichnet, dass** der oder die Analyse-Sensoren Wärme-Leitfähigkeitsanalysatoren sind.

## Claims

1. A method for detecting a sealing defect in packaging (1), packaging produced in a production line for product packaging, particularly food products, under a protective atmosphere, comprising the implementation of the following steps:
- A package to be tested circulates on a conveyor (2) of the product packaging production line;
- The package contains a protective atmosphere which contains a tracer gas, such as CO2;
- A hood (3) is provided, located above the conveyor, and equipped with means allowing the hood to move vertically above the conveyor;
- A detection system (4) for the presence of a package to be tested in front of (below) the hood is provided;
- When a package to be tested moving on the conveyor is detected as being below the hood, the hood is lowered onto the package, which then finds itself in a closed space;
- A force (6) is exerted on the package to create pressure on the package, thereby forcing the gas out of the package in case of a leak;
- An analysis of the atmosphere present in the hood is performed following the application of said force, and if the tracer gas is detected during this analysis, the package is identified as leaky;
- The hood is raised after the analysis, allowing the tested package to continue its path on the production line, a package identified as leaky being ejected from the line if applicable;
**characterized in that** the hood is equipped in its interior space with at least one gas analyzer (5), comprising one or more gas analysis sensors capable of performing said detection of the presence, in the atmosphere inside the hood following the application of said force, of a tracer gas.

2. A method according to claim 1, **characterized in that** the distance between the analyzer(s) and the package is automatically adjusted.

3. A system for detecting a sealing defect in packaging (1), for implementing the method according to one of claims 1 or 2, packaging produced in a production line for product packaging, for example food products, under a protective atmosphere, comprising the following elements:
- a hood (3), located above a conveyor (2) of the product packaging production line, the conveyor being capable of conveying the packages to be tested;
- means for vertically moving the hood above the conveyor;
- the hood is equipped in its interior space with means (for example a plate system) allowing pressure to be applied to a package to force gas out of the package in case of a leak;
- one or more gas analysis sensors (5) capable of detecting the presence, in the atmosphere inside the hood following the application of said force, of a tracer gas;
- a detection means (4) for the presence of a package opposite (below) the hood;
- data acquisition and processing means (6) capable, when the presence of a package to be analyzed is detected below the hood, of ordering the lowering of the hood onto the considered package, the exertion of said force on the package and the analysis of the atmosphere inside the hood, then the raising, after analysis, of the hood, to allow the tested package to continue its path on the production line;
**characterized in that** the hood is equipped in its interior space with one or more gas analysis sensors (5) capable of performing said detection of the presence, in the atmosphere inside the hood following the application of said force, of a tracer gas.

4. A system according to claim 3, **characterized in that** said acquisition and processing means are capable of automatically adjusting the distance between the gas analysis sensor(s) (5) and the package (1).

5. A system according to claim 3 or 4, **characterized in that** it comprises an ejection system capable, according to the result of said analysis, of ejecting a package identified as leaky from the line.

6. A system according to one of claims 3 to 5, **characterized in that** the gas analysis sensor(s) are thermal conductivity analyzers.
